# EUROPÄISCHE PATENTSCHRIFT

(11) **EP 3 169 569 B1**
(45) Veröffentlichungstag und Bekanntmachung des Hinweises auf die Patenterteilung: **01.07.2020**
(21) Anmeldenummer: 15753903.2
(22) Anmeldetag: 15.07.2015
(51) Int. Cl.: B60T 11/26, B60T 17/06

(54) **BREMSFLÜSSIGKEITSBEHÄLTER**
RESERVOIR FOR BRAKE FLUID
RÉSERVOIR DE LIQUIDE DE FREIN

(30) Priorität: 15.07.2014 DE 102014213709
(43) Veröffentlichungstag der Anmeldung: 24.05.2017
(73) Patentinhaber: Continental Teves AG & Co. OHG, 60488 Frankfurt am Main (DE)
(72) Erfinder: KREBS, Stephan, 65760 Eschborn (DE); KREBS, Werner, 65582 Hambach (DE); KRÄMER, Horst, 65462 Ginsheim-Gustavsburg (DE); KÖNIG, Harald, 61239 Ober-Mörlen (DE); SCHLICHT, Stephan, 64569 Nauheim (DE)
(86) Internationale Anmeldenummer: PCT/EP2015/066220
(87) Internationale Veröffentlichungsnummer: WO 2016/008955

(56) Entgegenhaltungen:
- EP-A1- 2 216 220
- DE-U1- 7 811 277

## Beschreibung

Die Erfindung bezieht sich auf einen Bremsflüssigkeitsbehälter für einen Hauptbremszylinder einer hydraulischen Bremsanlage, mit einem Behälterboden, einem gegenüber der Außenseite des Behälterbodens vorstehenden Stutzen, der zur Einführung in eine Aufnahme eines Hauptbremszylinders vorgesehen ist, wobei in dem Stutzen ein Sicherheitsventil angeordnet ist, dessen Ventilschließkörper derart mit der Aufnahme zusammenwirkt, dass das Sicherheitsventil geöffnet ist, wenn der Stutzen in die Aufnahme eingeführt ist, und geschlossen ist, wenn der Stutzen sich außerhalb der Aufnahme befindet.

Derartige Sicherheitsventile werden eingesetzt, um sicher zu stellen, dass aus dem Behälter, wenn dieser sich z. B. in Folge eines Crashs vom Hauptbremszylinder löst, keine Bremsflüssigkeit austritt, die sich ggf. an heißen Motorteilen entzünden könnte. Beispielsweise aus EP 2 216 220 A1 ist ein Schlitzventil bekannt, wobei der Dichtstopfen eine elastomere eingeschlitzte Membrane aufweist, welche die Öffnung des Behälterstutzens überdeckt. An der Membrane ist ein stiftförmiges Stützelement angeformt, welches im eingebauten Zustand sich am Boden der Aufnahme abstützt und dadurch den Schlitz öffnet.

Aus Praxis ist ein Sicherheitsventil bekannt, dessen Ventilsitz als Teil des Behälterbodens ausgebildet, so dass die Montage des Ventilschließkörpers relativ aufwändig ist, da dieser sich innerhalb des Behälters befindet.

Es wurde auch schon vorgeschlagen, einen Teil des Bodens mit dem Stutzen, an dem das Ventil montiert wurde, später durch Warmumformung in eine entsprechende Öffnung im Behälterboden zu platzieren.

Die Erfindung beruht daher auf der Aufgabe, die Montage eines Sicherheitsventils an einem Behälter zu vereinfachen, insbesondere soll die nachträgliche Montage in einen bereits vorhandenen Behälter ohne Werkzeuganpassungen des Behälters möglich sein.

Zur Lösung des Problems sieht die Erfindung vor, dass das Sicherheitsventil in einer Kartusche angeordnet ist, die in den Stutzen eingesetzt ist.

Dies hat zur Folge, dass der Behälter unabhängig von dieser Kartusche gefertigt und die Kartusche unabhängig vom Behälter vormontiert werden können. Die vormontierte Kartusche kann dann in den Stutzen eingeschoben werden und zwar vorzugsweise in das Ende des Stutzens, der vom Behälter entfernt ist.

Dabei kann die Kartusche derart ausgelegt werden, dass sie auch als Nachrüstsatz für bestehende Behälter, zum einschieben in den Stutzen beispielsweise bei Servicearbeiten vorgesehen ist.

Dazu besteht die Kartusche vorzugsweise aus einer Hülse, an deren Außenmantelfläche Mittel vorhanden sind, um diese druckmitteldicht in dem Stutzen zu halten.

Jede Verbindung, die sicherstellt, dass die eingesetzte Hülse sich druckmitteldicht in dem Stutzen befindet, ist denkbar, daher kann es sich um eine Schraubverbindung, eine Schweißverbindung, eine Schnappverbindung oder dergleichen handeln.

Vorzugsweise ist an der Außenmantelfläche ein umlaufender Wulst vorgesehen, der in die Innenmantelfläche des Stutzens eingepresst wird.

Zur Ausbildung des Sicherheitsventils besitzt die Hülse an ihrem dem Behälter zugewandten Ende einen nach innen gerichteten umlaufenden Kragen, dessen nach innen in die Hülse gerichtete Stirnfläche als Anschlagfläche für eine Ventilfeder dient und dessen nach außen gerichtete Stirnfläche als Ventilsitzfläche dient.

Die die Ventilsitzfläche bildende, nach außen gerichtete Stirnfläche kann eben sein und senkrecht zur Achse der Hülse verlaufen.

Alternativ kann die nach außen gerichtete Stirnfläche trichterförmig ausgebildet sein und sich nach außen konisch erweitern.

Der Ventilschließkörper besitzt einen Kopf, der sich außerhalb der Hülse vor der Ventilsitzfläche befindet, und an dessen Außenrand sich ein Dichtelement befindet.

Zum Betätigen des Ventils schließt an den Kopf ein Schaft an, der durch die Hülse hindurchgeführt ist und dessen unteres Ende in einem Stößel endet.

In seinem mittleren Bereich weist der Schaft eine radiale Erweiterung auf, deren nach innen in die Hülse gerichtete Stirnfläche als Gegenanschlagsfläche für die Feder dient.

Damit zwischen Schaft und Hülse ein ausreichender Durchfluss realisiert ist, kann die Erweiterung an ihrer Außenwand mit Ausnehmungen versehen sein.

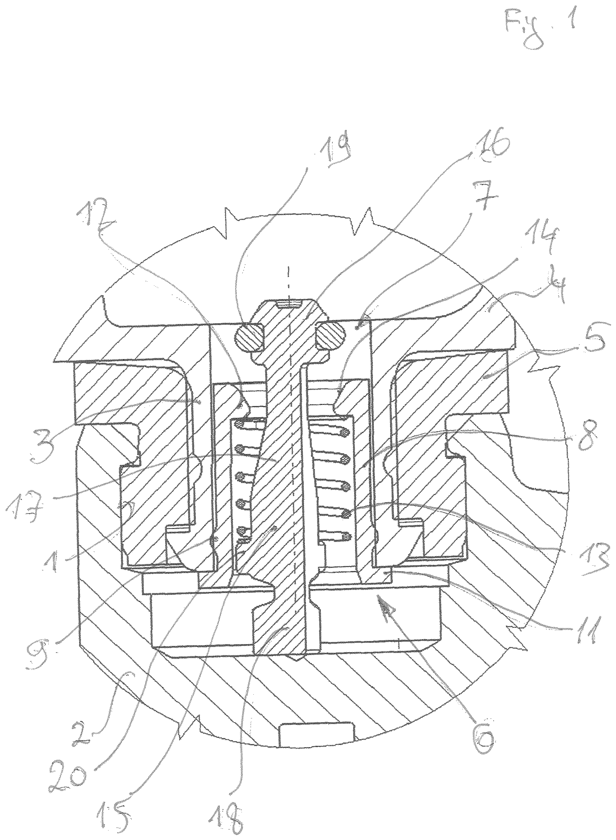

Im Folgenden wird anhand eines Ausführungsbeispiels die Erfindung in einer einzigen Figur näher erläutert:
Diese zeigt in einem Schnitt die Aufnahme 1 eines Hauptbremszylinders 2, in dem der Stutzen 3 eines Bremsflüssigkeitsbehälters 4, im Folgenden nur kurz "Behälter" genannt, eingesteckt ist und von einem Behälterstopfen 5 gehalten wird.

Innerhalb des Stutzens 3 befindet sich eine Kartusche 6 mit einem Sicherheitsventil 7. Die Kartusche 6 besteht aus einer Hülse 8, dessen Außendurchmesser im Wesentlichen dem Innendurchmesser des Stutzens 3 entspricht. Um eine druckmitteldichte Verbindung zu erhalten, besitzt die Hülse 8 an ihrem Außenrand einen umlaufenden Wulst 9, der die Innenmantelfläche des Stutzens 3 abdichtet.

Am unteren Ende der Hülse 8, das zum Hauptbremszylinder 2 weist, befindet sich ein umlaufender Flansch 11, der als Anschlag dient, wenn die Hülse 8 von unten in den Stutzen 3 eingeschoben wird.

Am oberen Ende der Hülse befindet sich ein nach innen gerichteter umlaufender Kragen 12, dessen nach unten gerichtete Stirnfläche als Anschlag für eine Ventilfeder 13 dient und dessen nach oben gerichtete Stirnfläche trichterförmig ausgebildet ist, sich nach oben konisch erweitert und als Ventilsitzfläche 14 dient.

Durch die Hülse 8 erstreckt sich ein Ventilschließkörper 15, bestehend aus einem Kopf 16 und einem Schaft 17, der sich in axialer Richtung an den Kopf 16 anschließt und der an seinem unteren Ende in einem Stößel 18 endet.

Der Kopf 16 besitzt ein in einer Nut liegendes umlaufendes Dichtelement 19, das der Ventilsitzfläche 14 gegenüberliegt und das die Form eines Dichtringes hat.

Am unteren Ende des Schaftes befindet sich eine radiale Erweiterung 20, deren nach oben gerichtete Stirnfläche als Gegenanschlagsfläche für die Ventilfeder 13 dient, die sich koaxial zum Schaft 17 zwischen der Anschlagfläche am Kragen 12 der Hülse und der Erweiterung 20 des Schaftes 17 erstreckt und die so vorgespannt ist, dass sie den Schaft 17 nach unten drückt, so dass sich der Kopf 16 mit dem Dichtelement 19 gegen die Ventilsitzfläche 14 legt, um das Sicherheitsventil 7 zu schließen.

In dem hier eingebauten Zustand wird dies dadurch verhindert, dass der Stößel 18 am Boden der Aufnahme 1 anliegt, und damit den Kopf 16 gegen den Druck der Ventilfeder 13 von der Ventilsitzfläche 14 entfernt hält. Sollte der Behälter 4 z. B. unfallbedingt aus dem Stutzen 3 entfernt werden, fehlt diese Gegenkraft, so dass das Sicherheitsventil 7 schließt.

### Bezugszeichenliste

- 1: Aufnahme
- 2: Hauptbremszylinder
- 3: Stutzen
- 4: Behälter
- 5: Behälterstopfen
- 6: Kartusche
- 7: Sicherheitsventil
- 8: Hülse
- 9: Wulst
- 10: -
- 11: Flansch
- 12: Kragen
- 13: Ventilfeder
- 14: Ventilsitzfläche
- 15: Ventilschließkörper
- 16: Kopf
- 17: Schaft
- 18: Stößel
- 19: Dichtelement
- 20: Erweiterung

## Patentansprüche

1. Bremsflüssigkeitsbehälter (4) für einen Hauptbremszylinder (2) einer hydraulischen Bremsanlage, mit einem Behälterboden, einem gegenüber einer Außenseite des Behälterbodens vorstehenden Stutzen (3), der zur Einführung in eine Aufnahme (1) des Hauptbremszylinders (2) vorgesehen ist, wobei in dem Stutzen (3) ein Sicherheitsventil (7) angeordnet ist, dessen Ventilschließkörper (15) derart mit der Aufnahme (1) zusammenwirkt, dass das Sicherheitsventil (7) geöffnet ist, wenn der Stutzen (3) in die Aufnahme (1) eingeführt ist, und geschlossen ist, wenn der Stutzen (3) sich außerhalb der Aufnahme (1) befindet, **dadurch gekennzeichnet, dass** das Sicherheitsventil (7) in einer Kartusche (6) angeordnet ist, die in den Stutzen (3) eingesetzt ist.

2. Bremsflüssigkeitsbehälter nach Anspruch 1, **dadurch gekennzeichnet, dass** die Kartusche (6) aus einer Hülse (8) besteht, an deren Außenmantelfläche Mittel vorhanden sind, um diese druckmitteldicht in dem Stutzen (3) zu halten.

3. Bremsflüssigkeitsbehälter nach Anspruch 2, **dadurch gekennzeichnet, dass** an der Außenmantelfläche der Hülse (8) ein umlaufender Wulst (9) vorgesehen ist, der in die Innenmantelfläche des Stutzens eingepresst wird.

4. Bremsflüssigkeitsbehälter nach einem der vorhergehende Ansprüche, **dadurch gekennzeichnet, dass** zur Ausbildung des Sicherheitsventils (7) die Hülse (8) an ihrem dem Behälter (4) zugewandten Ende einen nach innen gerichteten umlaufenden Kragen (12) besitzt, dessen nach innen in die Hülse gerichtete Stirnfläche als Anschlagfläche für eine Ventilfeder (13) dient und dessen nach außen gerichtete Stirnfläche als Ventilsitzfläche (14) dient.

5. Bremsflüssigkeitsbehälter nach Anspruch 4, **dadurch gekennzeichnet, dass** die nach außen gerichtete Stirnfläche eben ist und senkrecht zur Achse der Hülse (8) verläuft.

6. Bremsflüssigkeitsbehälter nach Anspruch 4, **dadurch gekennzeichnet, dass** die nach außen gerichtete Stirnfläche trichterförmig ausgebildet ist und sich nach außen konisch erweitert.

7. Bremsflüssigkeitsbehälter nach Anspruch 5 oder 6, **dadurch gekennzeichnet, dass** der Ventilschließkörper (15) einen Kopf (16) besitzt, der sich außerhalb der Hülse (8) vor der Ventilsitzfläche (14) befindet, und an dessen Außenrand sich ein Dichtelement (19) befindet.

8. Bremsflüssigkeitsbehälter nach Anspruch 7, **dadurch gekennzeichnet, dass** der Kopf (16) auf einem Schaft (17) sitzt, der durch die Hülse (8) hindurchgeführt ist und dessen unteres Ende in einem Stößel (18) endet.

9. Bremsflüssigkeitsbehälter nach Anspruch 8, **dadurch gekennzeichnet, dass** der Schaft (17) in seinem mittleren Bereich eine radiale Erweiterung (20) mit einer in Richtung Kragen (12) gerichteten Stirnfläche aufweist, wobei die Stirnfläche als Gegenanschlagsfläche für die Ventilfeder (13) dient.

10. Bremsflüssigkeitsbehälter nach Anspruch 9, **dadurch gekennzeichnet, dass** die Erweiterung (20) an ihrer radialen Außenwand mit Ausnehmungen versehen ist.

## Claims

1. Brake fluid reservoir (4) for a master brake cylinder (2) of a hydraulic brake system, having a reservoir base and a connector piece (3) which projects in relation to an outer side of the reservoir base and which is provided for insertion into a receiving part (1) of the master brake cylinder (2), wherein, in the connector piece (3), there is arranged a safety valve (7) whose valve closure body (15) interacts with the receiving part (1) such that the safety valve (7) is open if the connector piece (3) is inserted into the receiving part (1) and closed if the connector piece (3) is situated outside the receiving part (1), **characterized in that** the safety valve (7) is arranged in a cartridge (6) which is inserted into the connector piece (3).

2. Brake fluid reservoir according to Claim 1, **characterized in that** the cartridge (6) consists of a sleeve (8) on whose outer lateral surface there are provided means for holding said sleeve in the connector piece (3) in a pressure medium-tight manner.

3. Brake fluid reservoir according to Claim 2, **characterized in that**, on the outer lateral surface of the sleeve (8), there is provided an encircling bead (9) which is pressed into the inner lateral surface of the connector piece.

4. Brake fluid reservoir according to one of the preceding claims, **characterized in that**, for the formation of the safety valve (7), the sleeve (8) has at its end facing the reservoir (4) an inwardly directed encircling collar (12), whose end surface which is directed inwards into the sleeve serves as a stop surface for a valve spring (13) and whose outwardly directed end surface serves as a valve seat surface (14).

5. Brake fluid reservoir according to Claim 4, **characterized in that** the outwardly directed end surface is planar and extends perpendicularly to the axis of the sleeve (8).

6. Brake fluid reservoir according to Claim 4, **characterized in that** the outwardly directed end surface is of funnel-like form and extends conically outwards.

7. Brake fluid reservoir according to Claim 5 or 6, **characterized in that** the valve closure body (15) has a head (16) which is situated outside the sleeve (8) in front of the valve seat surface (14) and on whose outer edge there is situated a sealing element (19) .

8. Brake fluid reservoir according to Claim 7, **characterized in that** the head (16) is seated on a shaft (17) which is led through the sleeve (8) and whose lower end ends in a plunger (18).

9. Brake fluid reservoir according to Claim 8, **characterized in that** the shaft (17) has in its middle region a radial extension (20) with an end surface which faces in the direction of the collar (12), wherein the end surface serves as a counterpart stop surface for the valve spring (13).

10. Brake fluid reservoir according to Claim 9, **characterized in that** the extension (20) is provided with recesses on its radial outer wall.

## Revendications

1. Réservoir de liquide de frein (4) pour un maître-cylindre de frein (2) d'un système de freinage hydraulique, comprenant un fond de réservoir, une tubulure (3) faisant saillie depuis une face extérieure du fond de réservoir et étant prévue pour être introduite dans un logement (1) du maître-cylindre de frein (2), dans lequel, dans la tubulure (3) est disposée une soupape de sécurité (7) dont le corps de fermeture de soupape (15) coopère avec le logement (1) de telle sorte que la soupape de sécurité (7) est ouverte lorsque la tubulure (3) est introduite dans le logement (1), et est fermée lorsque la tubulure (3) se trouve à l'extérieur du logement (1), **caractérisé en ce que** la soupape de sécurité (7) est disposée dans une cartouche (6) qui est insérée dans la tubulure (3).

2. Réservoir de liquide de frein selon la revendication 1, **caractérisé en ce que** la cartouche (6) se compose d'une douille (8) sur la surface latérale extérieure de laquelle se trouvent des moyens pour la maintenir dans la tubulure (3) de manière étanche à un milieu sous pression.

3. Réservoir de liquide de frein selon la revendication 2, **caractérisé en ce que**, sur la surface latérale extérieure de la douille (8), un bourrelet périphérique (9) est prévu qui est pressé dans la surface latérale intérieure de la tubulure.

4. Réservoir de liquide de frein selon l'une quelconque des revendications précédentes, **caractérisé en ce que** pour la réalisation de la soupape de sécurité (7), la douille (8) possède à son extrémité tournée vers le réservoir (4) un col périphérique (12) tourné vers l'intérieur dont la surface frontale tournée vers l'intérieur de la douille sert de surface de butée à un ressort de soupape (13) et dont la surface frontale tournée vers l'extérieur sert de surface de siège de soupape (14).

5. Réservoir de liquide de frein selon la revendication 4, **caractérisé en ce que** la surface frontale tournée vers l'extérieur est plane et s'étend perpendiculairement à l'axe de la douille (8).

6. Réservoir de liquide de frein selon la revendication 4, **caractérisé en ce que** la surface frontale tournée vers l'extérieur est réalisée en forme d'entonnoir et s'évase de manière conique vers l'extérieur.

7. Réservoir de liquide de frein selon la revendication 5 ou 6, **caractérisé en ce que** le corps de fermeture de soupape (15) possède une tête (16) qui se trouve à l'extérieur de la douille (8) devant la surface de siège de soupape (14) et au bord extérieur duquel se trouve un élément d'étanchéité (19).

8. Réservoir de liquide de frein selon la revendication 7, **caractérisé en ce que** la tête (16) repose sur une tige (17) traversant la douille (8) et dont l'extrémité inférieure se termine par un poussoir (18) .

9. Réservoir de liquide de frein selon la revendication 8, **caractérisé en ce que** la tige (17) présente dans sa zone centrale un évasement radial (20) muni d'une surface frontale tournée en direction du col (12), la surface frontale servant de surface de contrebutée pour le ressort de soupape (13).

10. Réservoir de liquide de frein selon la revendication 9, **caractérisé en ce que** l'évasement (20) est muni d'évidements sur sa paroi extérieure radiale.
